# EUROPEAN PATENT APPLICATION

(11) **EP 4 353 789 A1**
(43) Date of publication of application: **17.04.2024**
(21) Application number: 22820358.4
(22) Date of filing: 10.06.2022
(51) Int. Cl.: C09D 175/04, C09D 201/00, F16F 1/12, F16F 1/24

(54) **COATING AGENT AND SPRING**

(30) Priority: 11.06.2021 JP 2021098247
(71) Applicant: NHK Spring Co., Ltd., Kanagawa 236-0004 (JP)
(72) Inventor: IBANO, Daisuke, Yokohama-shi, Kanagawa 236-0004 (JP); MATSUDA, Tsuyoshi, Yokohama-shi, Kanagawa 236-0004 (JP); ARISAKA, Norihumi, Yokohama-shi, Kanagawa 236-0004 (JP)
(74) Representative: DREISS Patentanwälte PartG mbB
(86) International application number: PCT/JP2022/023528
(87) International publication number: WO 2022/260180

(57) **Abstract**

A coating agent, a cured product of which after curing having a tear strength, at each of 25°C and 80°C, of 20 kN/m or more, and having a type A durometer hardness at 25°C of from 30 to 100, and a spring using the same.

## Description

### Technical Field

The present disclosure relates to a coating agent and a spring.

### Background Art

Various springs are used in automobiles, railway vehicles, etc. Many of these springs are made of steel and a surface thereof is usually coated to provide corrosion resistance.

For example, Patent Document 1 discloses "a method of forming a covering portion of a coil spring, characterized in that at least a portion in an axial direction of a coil spring preheated to a predetermined surface temperature is rolled within a gutter-shaped container containing a thermoplastic resin powder having a melting point of 250°C or less, to heat-melt the resin powder adhering to a spring wire of the coil spring and then solidify it".

Further, Patent Document 2 discloses "a highly durable spring, characterized by having a single coating film having a thickness of 450 µm or less, in which the coating film contains an epoxy resin, a phenol resin, and zinc". Patent Document 2 also discloses that "the coating film is a cured product of an epoxy resin-based powder coating containing an epoxy resin, a phenol resin, and zinc".

Furthermore, Patent Document 3 discloses "a chip resistant powder topcoat on a steel substrate having a corrosion resistant powder coating basecoat thereon, which includes a cured or fused product of a coating powder of one or more resin components of one or more toughened epoxy resins, 0.1 to 5 parts per hundred parts resin (phr) of one or more waxes and, optionally, up to 200 phr of one or more extenders".

In addition, Patent Document 4 discloses that "a suspension spring being a coil spring used in a vehicle suspension, characterized in that, at a portion that satisfies at least one of the following conditions: the stress during use is higher than other portion; or the probability of coating film damage due to stone chips is higher than other portion, the coating is thicker than that at a portion adjacent to the portion".

### Prior Art Document

### Patent Document

Patent Document 1: Japanese Patent Application Laid-Open (JP-A) No. S57-136972
Patent Document 2: International Application Publication No. WO2017/163877
Patent Document 3: JP-A No. 2009-120812
Patent Document 4: JP-A No. 2007-308067

### SUMMARY OF INVENTION

### Technical Problem

In coating agents for springs, a cured product layer (coating layer) after coating the spring is required to have durability against repeated expansion and contraction of the spring, contact between lines of the spring, and contact with other members. In addition, it is required to have impact resistance to withstand the impact of stone chips and the like.

However, recently, the level of demand is high and, in addition to durability at normal temperature, impact resistance is required especially at low temperature and high temperature, but it has not been sufficiently studied at present.

Similar characteristics are required for coating agents for applications other than coating agents for springs.

Therefore, an object of the present disclosure is to provide a coating agent capable of forming a cured product layer having excellent durability at normal temperature and high temperature and impact resistance at low temperature, and a spring using the same.

### Solution to Problem

The problem above is solved by the following means.
<1> A coating agent, a cured product of which after curing having a tear strength, at each of 25°C and 80°C, of 20 kN/m or more, and having a type A durometer hardness at 25°C of from 30 to 100.
<2> The coating agent according to <1>, in which the cured product after curing is a cured product having a urethane bond.
<3> The coating agent according to <1> or <2>, consisting of a composition including a polymeric polyol (A), an isocyanate (B), and a chain extender (C), or a composition including a prepolymer (D) that is a reaction product of a polyol and an isocyanate.
<4> The coating agent according to <3>, in which the polymeric polyol (A) includes at least one selected from the group consisting of a polycarbonate-based polyol (A1), a polyether-based polyol (A2) having a bisphenol structure, a lactone-based polyol (A3), a polyester-based polyol (A4), and a copolymer (A5) of a polycarbonate-based polyol and a lactone-based polyol.
<5> The coating agent according to any one of <1> to <4>, which is used for a spring.
<6> A spring, including a cured product layer of the coating agent according to any one of <1> to <5>, on at least a part of a surface.

### Advantageous Effects of Invention

According to the present disclosure, it is possible to provide a coating agent capable of forming a cured product layer having excellent durability at normal temperature and high temperature and impact resistance at low temperature, and a spring using the same.

### DESCRIPTION OF EMBODIMENTS

An embodiment that is an example of the present disclosure will be described below. These descriptions and examples are illustrative of the present disclosure and are not intended to limit the present disclosure.

In the present specification, the numerical range indicated using "(from) X to Y" indicates a range including the numerical values X and Y before and after "to" as the minimum value and the maximum value, respectively.

In the numerical range described stepwise in the present specification, the upper limit or lower limit value described in one numerical range may be replaced with the upper limit or lower limit value of other numerical range described stepwise. Moreover, in the numerical range described in the present disclosure, the upper limit or lower limit value of the numerical range may be replaced with the value shown in the examples.

In the present specification, each component may contain multiple kinds of corresponding substances. When referring to the amount of each component in the present specification, if multiple kinds of substances corresponding to each component are present, a total amount of the multiple kinds of substances is meant unless otherwise specified.

The coating agent according to the present embodiment is a coating agent, a cured product of which after curing having a tear strength, at each of 25°C and 80°C, of 20 kN/m or more, and having a type A durometer hardness at 25°C of from 30 to 100.

The cured product after curing means a cured product formed by drying a solvent or a cured product formed by reaction of the components.

Due to the configuration above, the coating agent of the present disclosure is capable of forming a cured product layer having excellent durability at normal temperature and high temperature and impact resistance at low temperature.

Details of the coating agent according to the present embodiment will be described below.

### (Characteristic)

In the coating agent of the present embodiment, the cured product after curing has a tear strength at 25°C of 20 kN/m or more, and preferably 60 kN/m or more and more preferably 90 kN/m or more from the viewpoint of improving durability at normal temperature.

However, the upper limit of the tear strength at 25°C is, for example, 350 kN/m or less from the viewpoint of impact absorption.

In the coating agent of the present embodiment, the cured product after curing has a tear strength at 80°C of 20 kN/m or more, and preferably 30 kN/m or more and more preferably 40 kN/m or more from the viewpoint of improving durability at high temperature.

However, the upper limit of the tear strength at 80°C is, for example, 150 kN/m or less from the viewpoint of impact absorption.

Here, the tear strength is measured according to the tear test specified in JIS K 7311:1995.

In the coating agent of the present embodiment, the cured product after curing has a type A durometer hardness at 25°C of from 30 to 100, and preferably from 50 to 100 and more preferably from 70 to 100 from the viewpoint of improving impact resistance at low temperature.

When the type A durometer hardness at 25°C is within the range above, the impact resistance at low temperature is enhanced. Moreover, in the case in which the coating agent of the present embodiment is applied to steel springs, the hardness becomes lower than that of steel springs, so noise can be prevented.

The type A durometer hardness is measured according to the hardness test specified in JIS K 7311:1995.

### (Composition)

The coating agent of the present embodiment may be either a composition of a thermoplastic resin or a composition for forming a thermosetting resin, as long as it is possible to form a cured product that has the characteristics above.

Examples of thermoplastic resins include acrylic resins, polystyrene resins, polyethylene resins, polypropylene resins, polyamide resins, nylon resins, vinyl chloride resins, polyacetal resins, polycarbonate resins, polyphenylene ether resins, polybutylene terephthalate resins, polyphenylene sulfone resins, polysulfone resins, polyarylate resins, and polyetherimide resins.

Examples of thermosetting resins include urethane resins, epoxy resins, cyanate resins, melamine resins, and phenol resins.

In addition, examples thereof include rubber materials such as natural rubber, butadiene rubber, chloroprene rubber, nitrile-butadiene rubber, and styrene-butadiene rubber.

Among these, in the coating agent of the present embodiment, the cured product after curing is preferably a cured product having a urethane bond and, specifically, preferably a urethane resin.

In particular, the coating agent of the present embodiment is preferably a composition including a polymeric polyol (A), an isocyanate (B), and a chain extender (C), or a composition including a prepolymer (D) that is a reaction product of a polyol and an isocyanate.

### [Composition including polymeric polyol (A), isocyanate (B), and chain extender (C)]

### -Polymeric polyol (A)-

The polymeric polyol (A) preferably includes at least one selected from the group consisting of a polycarbonate-based polyol (A1), a polyether-based polyol (A2) having a bisphenol structure, a lactone-based polyol (A3), a polyester-based polyol (A4), and a copolymer (A5) of a polycarbonate-based polyol and a lactone-based polyol, from the viewpoint of improving durability at normal temperature and high temperature and impact resistance at low temperature.

Examples of polycarbonate-based polyols (A1) include a polyol that is a reaction product of a glycol with an alkylene carbonate, a polyol that is a reaction product of a glycol with a diaryl carbonate, and a polyol that is a reaction product of a glycol with a dialkyl carbonate.

Examples of alkylene carbonates include ethylene carbonate, 1,2-propylene carbonate, and 1,2-butylene carbonate.

Examples of diaryl carbonates include diphenyl carbonate, 4-methyldiphenyl carbonate, 4-ethyldiphenyl carbonate, 4-propyldiphenyl carbonate, 4,4'-dimethyldiphenyl carbonate, 2-tolyl-4-tolyl carbonate, 4,4'-diethyldiphenyl carbonate, 4,4'-dipropyldiphenyl carbonate, phenyltolyl carbonate, bischlorophenyl carbonate, phenylchlorophenyl carbonate, phenylnaphthyl carbonate, and dinaphthyl carbonate.

Examples of dialkyl carbonates include dimethyl carbonate, diethyl carbonate, di-n-propyl carbonate, diisopropyl carbonate, di-n-butyl carbonate, diisobutyl carbonate, di-t-butyl carbonate, di-n-amyl carbonate, and diisoamyl carbonate.

Examples of polyether-based polyols (A2) having a bisphenol structure include a polyether polyol that is obtained by adding at least one of polyethylene oxide or polypropylene oxide to a cyclic diol (bisphenol A, hydrogenated bisphenol A, bisphenol S, bisphenol P, etc.), a propylene oxide adduct of bisphenol A, an ethylene oxide adduct of bisphenol A, an ethylene oxide adduct of hydrogenated bisphenol A, and a propylene oxide adduct of hydrogenated bisphenol A.

Among these, a propylene oxide adduct of bisphenol A is preferable as the polyether-based polyol.

Examples of lactone-based polyols (A3) include ring-opening polymers of lactones (ε-caprolactone, (β-methyl-δ-valerolactone, etc.).

Among these, a ring-opening polymer of a caprolactone (caprolactone-based polyol) is preferred.

Examples of polyester-based polyols (A4) include condensed polyester-based polyols of polybasic acids and polyhydric alcohols, other than lactone-based polyols.

Examples of polybasic acids include polyvalent carboxylic acids. Specifically, examples of polybasic acids include phthalic acid, isophthalic acid, tetrahydrophthalic acid, tetrahydroisophthalic acid, hexahydrophthalic acid, hexahydroterephthalic acid, trimellitic acid, adipic acid, sebacic acid, succinic acid, azelaic acid, fumaric acid, maleic acid, itaconic acid, pyromellitic acid, and acid anhydrides thereof.

Examples of polyhydric alcohols include glycols and tri- or higher polyhydric alcohols. Specifically, examples of glycols include ethylene glycol, propylene glycol, diethylene glycol, triethylene glycol, tetraethylene glycol, dipropylene glycol, polyethylene glycol, polypropylene glycol, neopentyl glycol, hexylene glycol, 1,3-butanediol, 1,4-butanediol, 1,5-pentanediol, 1,6-hexanediol, 2-butyl-2-ethyl-1,3-propanediol, methylpropanediol, cyclohexanedimethanol, and 3,3-diethyl-1,5-pentanediol. Specific examples of tri- or higher polyhydric alcohols include glycerin, trimethylolethane, trimethylolpropane, pentaerythritol, and dipentaerythritol.

Examples of copolymers (A5) of a polycarbonate-based polyol and a lactone-based polyol include copolymers of the polycarbonate-based polyol (A1) above and the lactone-based polyol (A3) above.

Each polymeric polyol (A) may be used singly or in combination of two or more.

The number average molecular weight of the polymeric polyol (A) is preferably from 300 to 12,000, and more preferably from 800 to 4,000.

Here, the number average molecular weight is a molecular weight obtained from the hydroxyl value measured according to JIS K0070 and the number of functional groups. The number average molecular weights of other components are also measured in the same manner.

### -Isocyanate (B)-

Examples of isocyanates (B) include known polyisocyanates such as: aromatic diisocyanates such as 2,4-tolylene diisocyanate, 2,6-tolylene diisocyanate, diphenylmethane diisocyanate, m-phenylene diisocyanate, p-phenylene diisocyanate, xylene-1,4-diisocyanate, 1,5-naphthylene diisocyanate, 1,4-naphthylene diisocyanate, and 3,3'-dichloro-4,4'-diphenylmethane diisocyanate; aliphatic diisocyanates such as hexamethylene diisocyanate, propylene-1,2-diisocyanate, and butylene-1,2-diisocyanate; and alicyclic diisocyanates such as isophorone diisocyanate, 4,4'-dicyclohexylmethane diisocyanate, and cyclohexylene diisocyanate.

The isocyanate (B) may be used singly or in combination of two or more.

### -Chain extender (C)-

Examples of chain extenders (C) include bifunctional to tetrafunctional polyols with a molecular weight of from 60 to 300.

Examples of bifunctional polyols include aliphatic diols such as ethylene glycol, propylene glycol, butanediol, pentanediol, neopentyl glycol, methylpentanediol, hexanediol, heptanediol, octanediol, nonanediol, decanediol, and dodecanediol; alicyclic diols such as cyclohexane diol and hydrogenated xylylene glycol; aromatic diols such as xylylene glycol; and polyether polyols obtained by addition polymerization of an alkylene oxide (ethylene oxide, propylene oxide, etc.) to a dihydric alcohol. The addition polymerization of multiple kinds of alkylene oxides may be random addition polymerization or block addition polymerization.

Examples of trifunctional polyols include trihydric alcohols having 3 to 10 carbon atoms such as glycerin and trimethylolpropane. Examples of trifunctional polyols include polyether polyols obtained by addition polymerization of an alkylene oxide (ethylene oxide, propylene oxide, etc.) to a trihydric alcohol. The addition polymerization of multiple kinds of alkylene oxides may be random addition polymerization or block addition polymerization.

Examples of tetrafunctional polyols include polyether polyols obtained by addition polymerization of an alkylene oxide to ethylenediamine, pentaerythritol, or the like.

Examples of other low-molecular-weight polyols include ester-based polyols obtained by condensing adipic acid, and short-chain diols such as ethylene glycol and 1,4-butanediol or polyfunctional triols such as glycerin.

The chain extender (C) may be used singly or in combination of two or more. It may be pre-reacted with a polyisocyanate as a prepolymer.

Among these, as the chain extender (C), ethylene glycol, 1,4-butanediol, 1,6-hexanediol, trimethylolpropane, and glycerin are preferred, and 1,4-butanediol and 1,6-hexanediol are more preferred, from the viewpoint of improving durability at normal temperature and high temperature and impact resistance at low temperature.

### [Composition including prepolymer (D) that is reaction product of polyol and isocyanate]

### -Prepolymer (D)-

The prepolymer is a prepolymer that is a reaction product of a polyol and an isocyanate.

Examples of polyols include the high-molecular-weight polyols (A) described above and the low-molecular-weight polyols exemplified in the chain extender (C) described above.

Examples of isocyanates include the isocyanate (B) described above.

The composition including a prepolymer (D) may include, in addition to the prepolymer (D), at least one selected from the group consisting of the polymeric polyol (A), the isocyanate (B), and the chain extender (C).

### -Other components-

The coating agent of the present embodiment may include other components.

Examples of other components include known additives such as catalysts, thickeners, antioxidants, colorants, UV absorbers, and inorganic fillers (calcium carbonate, etc.).

In addition, in order to improve the mechanical properties under warm conditions, the structure of the resin itself can be made highly heat-resistant, or a cross-linking agent or a reinforcing agent (CNT, etc.) can be added to increase the heat resistance.

### -Component ratio-

The equivalent ratio ((A+C)/(B+D)) of the polymeric polyol (A) and the chain extender (C) to the isocyanate (B) and the prepolymer (D) that is a reaction product of a polyol and an isocyanate is preferably from 0.5 to 1.5 or from 0.8 to 1.2, from the viewpoint of improving durability at normal temperature and high temperature and impact resistance at low temperature.

The mass ratio (A/C) of the polymeric polyol (A) to the chain extender (C) is preferably from 1.0 to 35.0 or from 1.5 to 10.0, from the viewpoint of improving durability at normal temperature and high temperature and impact resistance at low temperature.

The mass ratio (D/C) of the prepolymer (D) that is a reaction product of a polyol and an isocyanate to the chain extender (C) is preferably from 1.0 to 15.0 or from 5.0 to 10.0, from the viewpoint of improving durability at normal temperature and high temperature and impact resistance at low temperature.

### (Application of coating agent)

The coating agent of the present embodiment can be suitably applied, for example, as a coating agent for forming a protective layer of springs, stabilizers, bumpers, and building materials (wall tiles, etc.).

Among these, representative examples of the coating agent of the present embodiment include a coating agent for springs.

Specifically, the article of the present embodiment include a cured product layer of the coating agent for a spring of the present embodiment on at least a part of a surface.

The spring of the present embodiment include a cured product layer of the coating agent for a spring of the present embodiment on at least a part of a surface. The spring may be either a coil spring or a leaf spring.

Examples of aspects of providing a cured product layer of the coating agent include the following aspects:
1) for the purpose of preventing abnormal noise due to contact between spring wires, a surface of a part of the coil spring where the spring wires come into contact with each other;
2) for the purpose of coating protection, a surface of an end turn portion of the coil spring, or a part or an entire surface of the coil spring; and
3) for the purpose of shock mitigation and prevention of hangover, a part or an entire surface of the FRP leaf spring.

### (Coating method)

The coating method of the coating agent of the present embodiment is not particularly limited, and coating methods such as dip coating, spray coating, roller coating, brush coating, and flow coater can be applied.

In the case in which the coating agent of the present embodiment is coated with a coil spring, the thickness of the cured product layer to be formed is preferably configured to be 1 mm or more (particularly, from 1 to 2 mm), so there is concern about the problem of coating film sagging.

Therefore, it is also preferable to formulate a thickener to the coating agent of the present embodiment to increase the viscosity.

In addition, it is also preferable to formulate an acrylate resin and a photopolymerization initiator to the coating agent of the present embodiment so that it can be cured by ultraviolet rays, and cure the surface of the coating film by irradiating ultraviolet rays immediately after forming the coating film.

### Example

Examples of the present disclosure will be described below, but the present disclosure is not limited to these examples. In the following description, unless otherwise specified, "parts" and "%" regarding formulation amounts (contents, addition amounts) are all in terms of weight.

### <Examples 1 to 7, Comparative Examples 1 to 8>

The components of the amounts (g) shown in Table 1 (other than isocyanate), which had been preliminarily heated to 50°C, were precisely weighed into a polycup and stirred at 2,000 rpm for 1 minute with a high-speed emulsifying/dispersing machine, T.K. Homodisper 2.5 type (DH-2.5/1001), manufactured by Primix Corporation.

Next, the isocyanate shown in Table 1, which had been preliminary heated to 50°C, was added to the resulting solution and stirred at 2,000 rpm for 10 seconds with the "high-speed emulsifying/dispersing machine, T.K. Homodisper 2.5 type (DH-2.5/1001)", manufactured by Primix Corporation, to prepare a coating agent.

Next, the coating agent was coated with an aluminum plate that was coated with a release agent. The aluminum plate coated with the coating agent was placed in an oven, held at a temperature of 160°C for 20 minutes, then taken out from the oven, and cooled for 10 minutes at room temperature.

The cured product of the coating agent was peeled off from the aluminum plate.

Thus, a disk-shaped cured product of the coating agent with a thickness of 1.5 mm and a diameter of 5 cm was obtained.

Note that, in examples using a urethane prepolymer, the components shown in Table 1 were stirred at 2,000 rpm for 10 seconds with the "high-speed emulsifying/dispersing machine, T.K. Homodisper 2.5 type (DH-2.5/1001)", manufactured by Primix Corporation, to prepare a coating agent.

### <Evaluation>

The following evaluations were performed on the resulting cured product of the coating agent of each example.

### (Tear strength, type A durometer hardness)

According to the methods described above, the tear strength at each 25°C and 80°C, the elongation at 25°C, the type A durometer hardness at 25°C, and the type D durometer hardness at 25°C of the cured product were measured.

### (Durability at normal temperature)

The durability at normal temperature of the resulting cured product of the coating agent of each example was evaluated by performing a 2-ton fatigue test at normal temperature (at 25°C). Specifically, it is as follows.

The coating material was coated with a coil spring and cured by heating to prepare a test specimen. A load of 2 tons was repeatedly applied to the specimen, and whether or not the coating material was broken was tested each time when the load was applied. Evaluation was performed in accordance with the following evaluation criteria.
A: No breakage was confirmed until 30,000 times.
B: No breakage was confirmed until 5,000 times.
C: Breakage was confirmed until 5,000 times.

### (Durability at high temperature)

The durability at high temperature of the resulting cured product of the coating agent of each example was evaluated by performing a 2-ton fatigue test under warm condition (at 80°C). Specifically, it is as follows.

The coating material was coated with a coil spring and cured by heating to prepare a test specimen. A load of 2 tons was repeatedly applied to the specimen at high temperature, and whether or not the coating material was broken was tested each time when the load was applied. Evaluation was performed in accordance with the following evaluation criteria.
A: No breakage was confirmed until 30,000 times.
B: No breakage was confirmed until 5,000 times.
C: Breakage was confirmed until 5,000 times.

### (Impact resistance at low temperature)

Car suspension parts are hit by stone chips, so the coating film needs to be flexible so that the coating film does not crack even at low temperature. Therefore, in order to evaluate the flexibility of the coating agent at low temperature, a cast plate with a thickness of 1.5 mm, a width of 30 mm, and a length of 60 mm was left under an environment of -36°C for 24 hours, then taken out, and immediately bent 180°, and the presence or absence of cracks was confirmed.
A: Not cracked
C: Cracked

The details of the notation in Table 1 are as follows.

### -High molecular weight polyol-

•PH50: Polycarbonate-based polyol ("ETERNACOLL PH50", manufactured by Ube Industries, Ltd.)
•BENEBIOL HS0830B: Polycarbonate-based polyol ("BENEBIOL HS0830B", manufactured by Mitsubishi Chemical Corporation)
•C-3090: Polycarbonate-based polyol ("Kuraray Polyol C-3090", manufactured by Kuraray Co., Ltd.)
•BPX-33: Propylene oxide adduct of bisphenol A ("ADEKA Polyether BPX-33", manufactured by ADEKA Co., Ltd.)
•BPX-55: Propylene oxide adduct of bisphenol A ("ADEKA Polyether BPX-55", manufactured by ADEKA Co., Ltd.)
•T2305: Caprolactone-based polyol ("PLACCEL T2305", manufactured by Daicel Corporation)
•L220LA: Caprolactone-based polyol ("PLACCEL L220LA", manufactured by Daicel Corporation)
•P-530: Polyester-based polyol ("Kuraray Polyol P-530", manufactured by Kuraray Co., Ltd.)
•F-3010: Polyester-based polyol ("Kuraray Polyol F-3010", manufactured by Kuraray Co., Ltd.)
•Capa7203: Copolymer of polycarbonate-based polyol and lactone-based polyol ("Capa 7203", manufactured by INGEVITY)

### -Isocyanate-

•Coronate MX: 1,4-MDI (monomeric MDI) ("Coronate MX", manufactured by Tosoh Corporation)

### -Urethane prepolymer-

•Adiprene E740: Urethane prepolymer that is copolymer of polyether-based polyol and PPDI ("Adiprene E740", manufactured by LANXESS)
•Hi-Ad 2867B: Urethane prepolymer that is copolymer of polyester-based polyol and MDI ("Hi-Ad 2867B", manufactured by H&K Co., Ltd.)

### -Chain extender (C)-

•14BD: 1,4-Butanediol

### -Plasticizer-

•LIR-30: Polyisoprene ("Kuraprene LIR-30", manufactured by Kuraray Co., Ltd.)

The measurement results of physical properties and the results of various tests of each example are listed in Table 1 below.

**[Table 1]**

| Example/Comparative Example | | | Comparative Example 1 | Comparative Example 2 | Comparative Example 3 | Comparative Example 4 | Comparative Example 5 |
|---|---|---|---|---|---|---|---|
| High-molecular-weight polyol (A) | (A1) | PH50 | | | | | |
| | | BENEBIOL HS0830B | | | | | 17 |
| | | C-3090 | | | | | |
| | (A2) | BPX-33 | | | | | 16 |
| | | BPX-55 | | | | 16 | 6 |
| | | BPX-2000 | | | | | |
| | (A3) | T2305 | 30 | 30 | 30 | | |
| | | L220LA | | | | 6 | 7 |
| | (A4) | P-530 | | | | | |
| | | F-3010 | | | | | |
| | (A5) | Capa7203 | | | | | |
| Isocyanate (B) | | Coronate MX | 3 | 3 | 6 | 15 | 17 |
| Urethane prepolymer (D) | | Adiprene E740 | | | | | |
| | | Hi-Ad 2867B | | | | | |
| Chain extender (C) | | 14BD | | | 1 | 2 | |
| Plasticizer | | LIR-30 | 10 | | | | |
| Component ratio | | A/B | 10.0 | 10.0 | 5.0 | 1.5 | 2.7 |
| | | A/C or D/C | | | 30.0 | 11.0 | |
| Evaluation | Normal temperature 25°C | | | | | | |
| | Tear strength | kN/m | 10 | 18 | 30 | 195 | 179 |
| | Duro A | | 20 | 40 | 60 | 95 | 95 |
| | Duro D | | - | - | - | 65 | 60 |
| | Elongation | % | 678 | 621 | 530 | 78 | 158 |
| | Durability | | C | C | B | A | A |
| | High temperature 80°C | | | | | | |
| | Tear strength | kN/m | 5 | 7 | 17 | 8 | 10 |
| | Durability | | C | C | C | C | C |
| | Impact resistance (-36°C) | | A | A | A | A | A |

**[Table 1]-Continued**

| Example/Comparative Example | | | Comparative Example 6 | Comparative Example 7 | Comparative Example 8 | Example 1 | Example 2 |
|---|---|---|---|---|---|---|---|
| High-molecular-weight polyol (A) | (A1) | PH50 | | | | | 12 |
| | | BENEBIOL HS0830B | 6 | 18 | 10 | | |
| | | C-3090 | | | | | |
| | (A2) | BPX-33 | | 9 | 13.2 | | |
| | | BPX-55 | | | | | 5 |
| | | BPX-2000 | | | 7 | | |
| | (A3) | T2305 | 15 | | | 30 | |
| | | L220LA | | | 7 | | 8 |
| | (A4) | P-530 | 8 | | 8 | | |
| | | F-3010 | | | | | |
| | (A5) | Capa7203 | | | | | |
| Isocyanate (B) | | Coronate MX | 17 | 17 | 17 | 7.5 | 17 |
| Urethane prepolymer (D) | | Adiprene E740 | | | | | |
| | | Hi-Ad 2867B | | | | | |
| Chain extender (C) | | 14BD | 2.5 | 1 | | 1.5 | 3 |
| Plasticizer | | LIR-30 | | | | | |
| Component ratio | | A/B | 1.7 | 1.6 | 2.7 | 4.0 | 1.5 |
| | | A/C or D/C | 11.6 | 27.0 | | 20.0 | 8.3 |
| Evaluation | Normal temperature 25°C | | | | | | |
| | Tear strength | kN/m | 93 | 205 | 100 | 45 | 68 |
| | Duro A | | 90 | 95 | 90 | 70 | 80 |
| | Duro D | | 40 | 70 | 50 | - | 35 |
| | Elongation | % | 272 | 70 | 270 | 480 | 380 |
| | Durability | | A | A | A | A | A |
| | High temperature 80°C | | | | | | |
| | Tear strength | kN/m | 12 | 10 | 11 | 21 | 23 |
| | Durability | | C | C | C | B | B |
| | Impact resistance (-36°C) | | A | C | C | A | A |

**[Table 1]-Continued**

| Example/Comparative Example | | | Example 3 | Example 4 | Example 5 | Example 6 | Example 7 |
|---|---|---|---|---|---|---|---|
| High-molecular-weight polyol (A) | (A1) | PH50 | 12 | | | | |
| | | BENEBIOL HS0830B | | | | | |
| | | C-3090 | | | | 11 | 14 |
| | (A2) | BPX-33 | | | | | |
| | | BPX-55 | | | | | 5 |
| | | BPX-2000 | | | | | |
| | (A3) | T2305 | 12 | | | | |
| | | L220LA | | | | | |
| | (A4) | P-530 | | | | | |
| | | F-3010 | | 5 | | | |
| | (A5) | Capa7203 | | 10 | | 10 | 8 |
| Isocyanate (B) | | Coronate MX | 15 | 17 | | 17 | 17 |
| Urethane prepolymer (D) | | Adiprene E740 | | | 6 | | |
| | | Hi-Ad 2867B | | | 2 | | |
| Chain extender (C) | | 14BD | 2 | 4.4 | 1 | 4.3 | 4.3 |
| Plasticizer | | LIR-30 | | | | | |
| Component ratio | | A/B | 1.6 | 0.9 | | 1.2 | 1.3 |
| | | A/C or D/C | 12.0 | 3.4 | 8.0 | 4.9 | 5.1 |
| Evaluation | Normal temperature 25°C | | | | | | |
| | Tear strength | kN/m | 62 | 180 | 108 | 135 | 140 |
| | Duro A | | 80 | 90 | 90 | 80 | 80 |
| | Duro D | | 35 | 60 | 45 | 40 | 40 |
| | Elongation | % | 420 | 219 | 422 | 456 | 433 |
| | Durability | | A | A | A | A | A |
| | High temperature 80°C | | | | | | |
| | Tear strength | kN/m | 30 | 34 | 42 | 60 | 67 |
| | Durability | | B | B | A | A | A |
| | Impact resistance (-36°C) | | A | A | A | A | A |

From the results above, it can be seen that the coating agent according to Examples is capable of forming a cured product layer having excellent durability and impact resistance at low temperature.

The disclosure of Japanese Patent Application No. 2021-098247 is incorporated herein by reference in its entirety.

All publications, patent applications, and technical standards mentioned in the present specification are herein incorporated by reference to the same extent as if each individual publication, patent application, or technical standard was specifically and individually indicated to be incorporated by reference.

## Claims

1. A coating agent, a cured product of which after curing having a tear strength, at each of 25°C and 80°C, of 20 kN/m or more, and having a type A durometer hardness at 25°C of from 30 to 100.

2. The coating agent according to claim 1, wherein the cured product after curing is a cured product having a urethane bond.

3. The coating agent according to claim 1 or 2, consisting of a composition comprising a polymeric polyol (A), an isocyanate (B), and a chain extender (C), or a composition comprising a prepolymer (D) that is a reaction product of a polyol and an isocyanate.

4. The coating agent according to claim 3, wherein the polymeric polyol (A) comprises at least one selected from the group consisting of a polycarbonate-based polyol (A1), a polyether-based polyol (A2) having a bisphenol structure, a lactone-based polyol (A3), a polyester-based polyol (A4), and a copolymer (A5) of a polycarbonate-based polyol and a lactone-based polyol.

5. The coating agent according to any one of claims 1 to 4, which is used for a spring.

6. A spring, comprising a cured product layer of the coating agent according to any one of claims 1 to 5, on at least a part of a surface.
